# EUROPÄISCHE PATENTSCHRIFT

(11) **EP 2 057 876 B1**
(45) Veröffentlichungstag und Bekanntmachung des Hinweises auf die Patenterteilung: **19.07.2017**
(21) Anmeldenummer: 08019254.5
(22) Anmeldetag: 04.11.2008
(51) Int. Cl.: A01C 17/00

(54) **Zweischeibenstreuer**
Two-disk caster
Epandeur à double plaque

(30) Priorität: 07.11.2007 DE 102007053550
(43) Veröffentlichungstag der Anmeldung: 13.05.2009
(73) Patentinhaber: RAUCH Landmaschinenfabrik GmbH, 76547 Sinzheim (DE)
(72) Erfinder: Rauch, Norbert, 77815 Bühl (DE); Gushurst, Hans, 76547 Sinzheim (DE); Doll, Franz, 76547 Sinzheim (DE)
(74) Vertreter: Lichti - Patentanwälte Partnerschaft mbB

(56) Entgegenhaltungen:
- EP-A- 0 278 251
- EP-A- 0 330 839
- EP-A- 0 540 889
- DE-A1- 3 718 663
- DE-A1- 19 733 549

## Beschreibung

Die Erfindung betrifft einen Zweischeibenstreuer mit einem Streugut-Behälter, der zwei trichterförmige Unterteile mit je einem drehbaren Boden mit daran angeordneten Dosiereinrichtungen aufweist, die jeweils aus einer Dosieröffnung und einem steuerbaren Dosierschieber zur Abgabe des Streugutes in einstellbaren Streumengen bestehen, und zwei rotierend angetriebenen Wurfscheiben, wobei zur Verlagerung des Aufgabepunktes des dosierten Streugutes auf die Wurfscheibe ein ortsfest angelenkter Elektrozylinder vorgesehen ist, der am Boden angreift und diesen zusammen mit der Dosiereinrichtung verdreht.

Ein solcher Zweischeibenstreuer ist Stand der Technik (DE 41 34 315 A1). Jeweils ein Elektrozylinder dreht einen Behälterboden bzw. -topf mit Dosieröffnung samt Verstelleinrichtung für die Streumenge koaxial um eine Achse, die gleichzeitig die Wurfscheibenachse ist und auch mit der Achse des im Behälter oberhalb des Bodens umlaufenden Rührwerks zusammenfällt.

Mit der Verlagerung des Aufgabepunktes lassen sich die Streuwinkel jeder Wurfscheibe und/oder die Streubreite bzw. die Arbeitsbreite verändern und über die mitgeführte Dosiereinrichtung zugleich die Streumenge, gegebenenfalls auf eine Vergrößerung oder Verkleinerung der Arbeitsbreite einstellen.

Bei dem bekannten Streuer sind die Elektrozylinder im Wesentlichen parallel zur Fahrtrichtung des Streuers angeordnet und greifen mit ihrem betätigungsseitigen Ende direkt am zu drehenden Behälterboden bzw. -topf an. Sie liegen ferner fast auf ihrer gesamten Länge im Umlaufbereich und nahe der Wurfscheiben. Die Elektrozylinder sind folglich aufgrund ihrer exponierten Lage dem Streugutstaub und verspritzenden Streugutpartikel ungeschützt ausgesetzt und in ihrer Funktionsfähigkeit gefährdet, was insbesondere bei Mineraldünger gravierend ist.

Bei einem anderen bekannten Streuer (DE 40 12 826 A1) sind die Stellmotore für die Dosierschieber quer zur Fahrtrichtung vor den Wurfscheiben angeordnet, allerdings ist bei diesem Stand der Technik keine Verstellung des Aufgabepunktes vorgesehen.

Die EP 0 540 889 A1 beschreibt eine Vielzahl von Ausführungsformen, die sämtlich eine Aufgabepunkt-Verstellung einschließen. In den Fig. 1 bis 8 sind jeweils Ausführungsformen gezeigt, bei denen der Aufgabepunkt dadurch verstellt wird, dass die gesamte Wurfscheibe verlagert wird. Dies setzt aufwändige Führungen für die rotierend angetriebenen Wurfscheiben voraus. Die Fig. 9 bis 13 sind von der den Oberbegriff des Anspruchs 1 bildenden DE 41 34 315 übernommen. Bei dem Ausführungsbeispiel nach Fig. 14 und 15 bilden die Bodenplatte mit der Auslauföffnung und dem Dosierschieber eine Einheit. Diese Einheit ist zur Verlagerung des Aufgabepunktes mittels zweier Stellmotore in sich schneidenden Richtungen verstellbar. Von den beiden Stellmotoren ist jeweils der quer zur Fahrtrichtung angeordnete Stellmotor voll dem Düngerstaub und verspritzenden Düngerpartikeln ausgesetzt.

Der Erfindung liegt die Aufgabe zugrunde, einen Zweischeibenstreuer gemäß dem Oberbegriff des Anspruchs 1 so auszubilden, dass eine Verlagerung des Aufgabepunktes ohne funktionelle Beeinträchtigung des Elektrozylinders durch Düngerstaub oder Düngerpartikel möglich ist.

Diese Aufgabe wird erfindungsgemäß dadurch gelöst, dass der Elektrozylinder im Wesentlichen quer zur Fahrtrichtung des Streuers im Bereich zwischen den Wurfscheiben und gegenüber diesen in Fahrtrichtung nach vorne versetzt angeordnet ist und über je ein Hebelgestänge mit sich nach außen erstreckender Lenkerstange an dem drehbaren Boden angreift.

Durch die Anordnung des Elektrozylinders bzw. der Elektrozylinder in dem relativ großen Freiraum zwischen den Wurfscheiben und durch das Versetzen in Fahrtrichtung nach vorne sowie durch den Anschluss eines Hebelgestänges, das nur über je eine nach außen erstreckenden Lenkerstange an den drehbaren Boden angreift, befinden sich der bzw. die Elektrozylinder außerhalb des Drehbereichs des Bodens und auch außerhalb des Umlaufbereichs der Wurfscheiben. Dies lässt sich problemlos durch entsprechende konstruktive Gestaltung des Hebelgestänges optimieren. Nur die Lenkerstange und deren Gelenk am drehbaren Boden können von Düngerstaub oder Düngerpartikeln getroffen werden. Diese Konstruktionsteile sind ungleich robuster und störungsfreier als Elektrozylinder.

Eine vorteilhafte Ausführungsform der Erfindung zeichnet sich dadurch aus, dass für jeden drehbaren Boden ein eigener Elektrozylinder vorgesehen ist und beide Elektrozylinder im Wesentlichen quer zur Fahrtrichtung des Streuers im Bereich zwischen den Wurfscheiben und gegenüber diesen in Fahrtrichtung nach vorne versetzt angeordnet sind und über je ein Hebelgestänge mit sich jeweils nach außen erstreckenden Lenkerstangen an dem entsprechenden drehbaren Boden angreifen. Bei dieser Ausführungsform besteht die Verstelleinrichtung für jeden Boden im Wesentlichen aus gleichen Bauteilen. Der eine Elektrozylinder betätigt über das Hebelgestänge die sich nach links erstreckende Lenkerstange, der andere Elektrozylinder über ein eigenes Hebelgestänge die sich nach rechts erstreckende Lenkerstange. Durch unterschiedliche Betätigung der Elektrozylinder lassen sich unterschiedliche Stellwege der Lenkerstangen und damit assymetrische Streubilder an beiden Wurfscheiben erreichen, um beispielsweise ein Grenzstreuen oder das Abstreuen von keilförmigen Feldstreifen ermöglichen.

In einer besonders bevorzugten Ausführung ist vorgesehen, dass für beide drehbare Böden ein einziger Elektrozylinder im Wesentlichen quer zur Fahrtrichtung des Streuers im Bereich zwischen den Wurfscheiben und gegenüber diesen in Fahrtrichtung nach vorne versetzt angeordnet ist und über je ein Hebelstänge mit einer diese kinematisch verbindenden, zentral angeordneten Koppel auf je eine an den entsprechenden drehbaren Boden angreifende Lenkerstange wirkt. Diese Ausführungsform kommt mit einem einzigen Elektrozylinder und entsprechend gestalteten Hebelgestängen und den beiden Lenkerstangen zur Betätigung der beiden Böden aus. Der zweite Elektrozylinder wird durch eine die Hebelgestänge mechanisch, kinematisch verbindende Koppel ersetzt. Damit ist eine besonders kostengünstige und wenig störanfällige Bauweise gegeben.

Zweckmäßigerweise ist vorgesehen, dass der Elektrozylinder über einen an ihm und an einer ortsfesten Konsole gelagerten Schwenkhebel auf einen in der Konsole gelagerten Zapfen wirkt, dessen Drehbewegung über einen Schwenkhebel auf die Lenkerstange übertragbar ist, wobei vorzugsweise der einzige Elektrozylinder über einen an ihm angelenkten Schwenkhebel auf einen an einer ortsfesten Konsole drehbar gelagerten Zapfen wirkt, der ein einen Teil der Koppel bildendes Stirnradsegment aufweist, das mit einem in einem in der Konsole drehbar gelagerten weiteren Zapfen angeordneten weiteren Stirnradsegment kämmt, wobei die über die Stirnradsegmente kinematisch verbundenen Zapfen über je einen Schwenkhebel auf eine Lenkerstange wirken.

Die miteinander kämmenden Stirnradsegmente sorgen für eine gleiche Übertragung des Stellwegs des Elektrozylinders auf beide Lenkerstangen. Außerdem sind sie unempfindlich gegen Verschmutzung etc.

Stattdessen kann als Koppel ein zweiarmiger, außermittig gelagerter Hebel vorgesehen sein, an dessen einem Arm der Elektrozylinder und eine der Lenkerstangen gelenking angreift, während am anderen Arm die andere Lenkerstange angelenkt ist und beide Lenkerstangen nach gegenüberliegenden Seiten an den jeweiligen Boden geführt sind, wobei die Hebellänge zwischen Hebellager und den Anlenkpunkten für die Lenkerstangen unterschiedlich ist, um den Versatz der Verstelleinrichtung gegenüber den Achsen der Wurfscheiben Rechnung zu tragen.

Eine weiterhin bevorzugte Ausführung zeichnet sich dadurch aus, dass ein sich zwischen den Wurfscheiben und mit Ausnahme deren Abwurfbereichs oberhalb derselben erstreckender Wurfscheibenschutz vorgesehen ist, der oben im Wesentlichen nur je einen Ausschnitt für die Aufgabe des Streugutes auf die beiden Wurfscheiben aufweist, wobei die Konsole für den bzw. die Elektrozylinder und diese selbst sowie die wesentlichen Teile des Hebelgestänges von den Wurfscheiben aus gesehen hinter dem Wurfscheibenschutz angeordnet sind.

Ein Wurfscheibenschutz der vorgenannten Bauart ist beispielsweise in der DE 197 33 549 B4 beschrieben. Die bevorzugte Ausführungsform der Erfindung ist jedoch nicht auf einen solchen konkreten Wurfscheibenschutz beschränkt. Wichtig im Zusammenhang mit der Erfindung ist nur, dass die Konsole für den bzw. die Elektrozylinder, diese selbst und die wesentlichen bewegten Teile der Verstelleinrichtung hinter dem Wurfscheibenschutz und damit geschützt gegen Düngerstaub und Düngerpartikel untergebracht sind. Lediglich die Lenkerstangen durchgreifen den Wurfscheibenschutz nach außen oder liegen stattdessen wenig über dem Wurfscheibenschutz.

Der bzw. die Elektrozylinder sind vorzugsweise etwa waagerecht angeordnet, so dass sich die von ihnen erzeugten Stellkräfte in günstiger Weise auf das bzw. die Hebelgestänge übertragen lassen.

Ein weiterhin vorteilhaftes Ausführungsbeispiel zeichnet sich dadurch aus, dass mit jedem drehbaren Boden eine mitlaufende Positionsanzeige verbunden ist, die mit einer ortsfesten Skala zur Anzeige eines die Lage des Aufgabepunktes repräsentierenden Wertes zusammenwirkt.

Auf diese Weise lässt sich der den Aufgabepunkt repräsentierende und von der Verstelleinrichtung eingestellte Wert hinten am Streuer ablesen und eventuelle Unstimmigkeiten auch zwischen den Anzeigen links/rechts feststellen.

In Weiterentwicklung dieses Ausführungsbeispiels ist vorgesehen, dass die Positionsanzeige lösbar mit dem drehbaren Boden verbunden ist und zur manuellen Notbetätigung über einen Raststab mit einer der Skala angepassten Folge von Restaussparungen in Eingriff bringbar ist. Eine solche Notbestätigung kann erforderlich sein, wenn es zu funktionellen Störungen an der Verstelleinrichtung oder zu durch die Verstelleinrichtung nicht zu überwindenden Zwängungskräften zwischen bewegten Teilen kommt.

Eine gute Ablesbarkeit und Zugänglichkeit ist gewährleistet, wenn die Skala und die mit ihr zusammenwirkende Positionsanzeige auf der der Fahrtrichtung abgekehrten Rückseite des Bodens etwa mittig derselben angeordnet sind.

Eine bevorzugte Ausführungsform zeichnet sich dadurch aus, dass jeder Elektrozylinder eine Lagerückmeldung aufweist und von einer elektronischen Bedien- und Regeleinheit auf eine gewünschte, für die Lage des Aufgabepunktes repräsentative Position steuerbar ist.

Die für den Aufgabepunkt repräsentative Position wird ergänzend durch die Positionsanzeige an der Skala an der Rückseite des Streuers sichtbar gemacht.

Nachstehend ist die Erfindung anhand einiger in der Zeichnung wiedergegebenen Ausführungsbeispielen beschrieben, die zugleich weitere Vorteile erkennen lassen. In der Zeichnung zeigen:

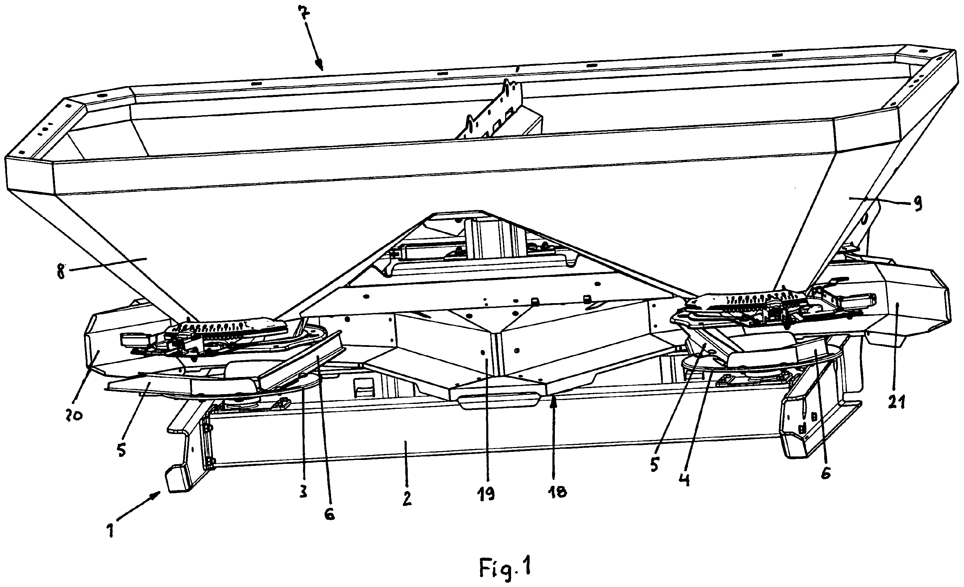

- **Fig. 1**: eine perspektivische Ansicht auf die Rückseite eines Zweischeibenstreuers;

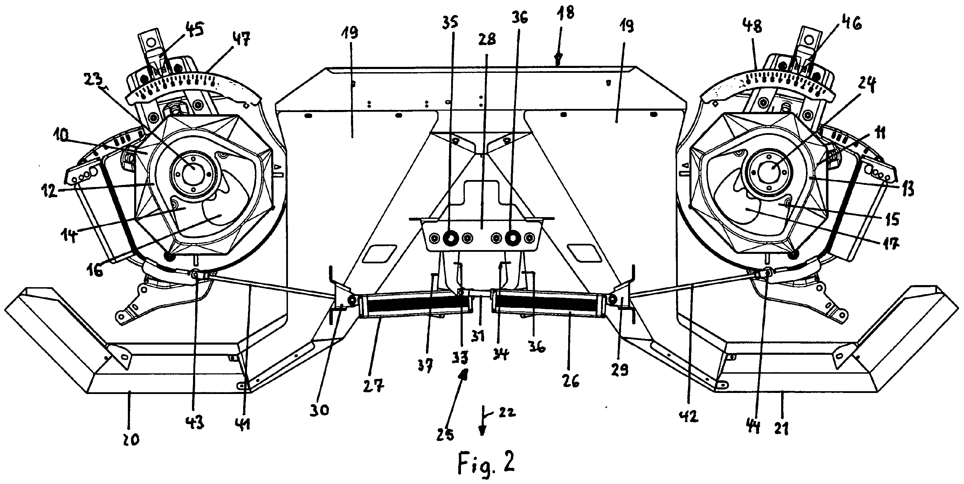

- **Fig. 2**: eine isometrische Draufsicht auf die beiden Behälterunterteile mit dem drehbaren Boden und die Verstelleinrichtung zur Verlagerung des Aufgabepunktes;

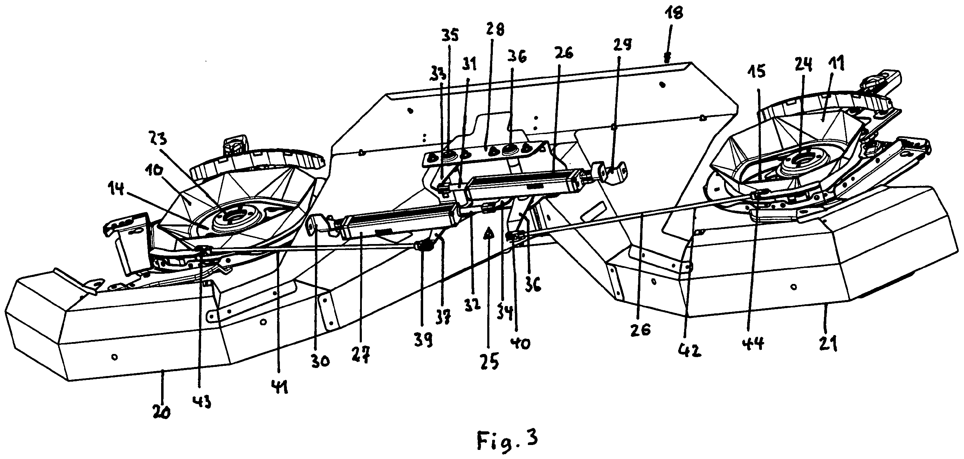

- **Fig. 3**: eine perspektivische Ansicht der in Fig. 2 gezeigten Ausführungsform von vorne;

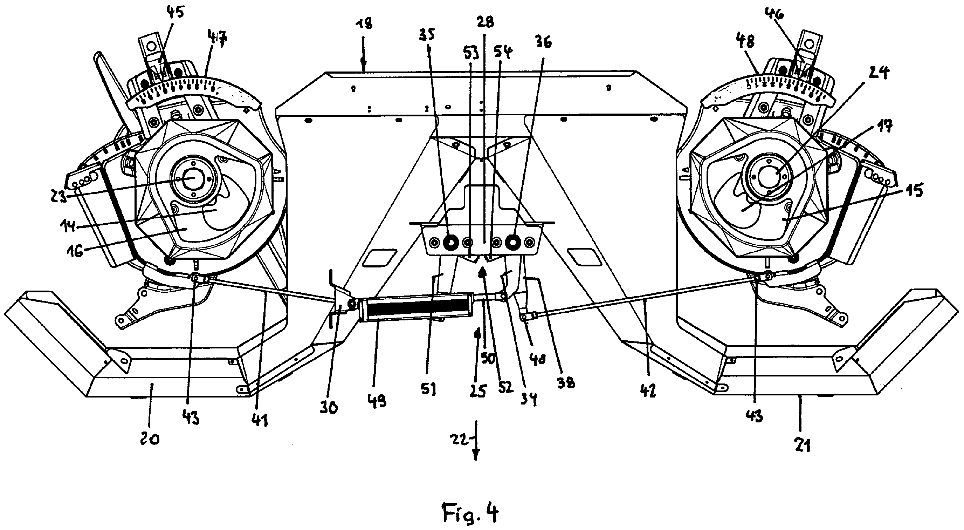

- **Fig. 4**: eine der Fig. 2 entsprechende isometrische Draufsicht mit einer anderen Ausführungsform der Verstelleinrichtung;

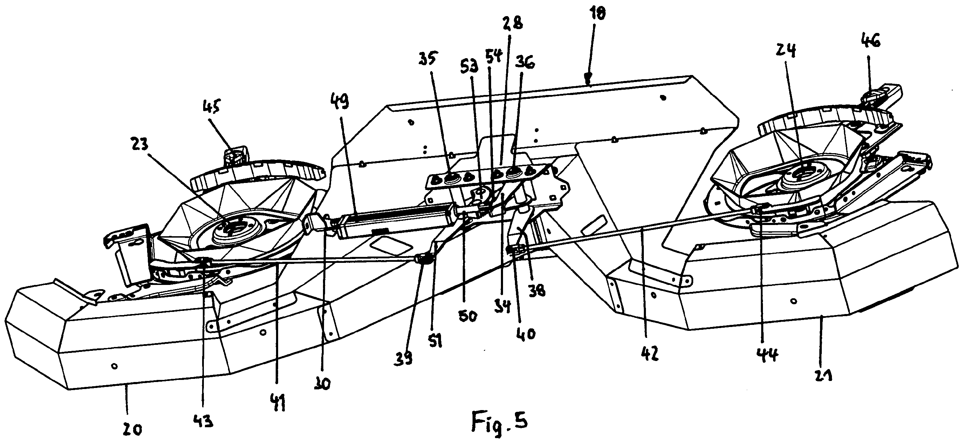

- **Fig. 5**: eine perspektivische Ansicht der in Fig. 4 gezeigten Ausführungsform von vorne;

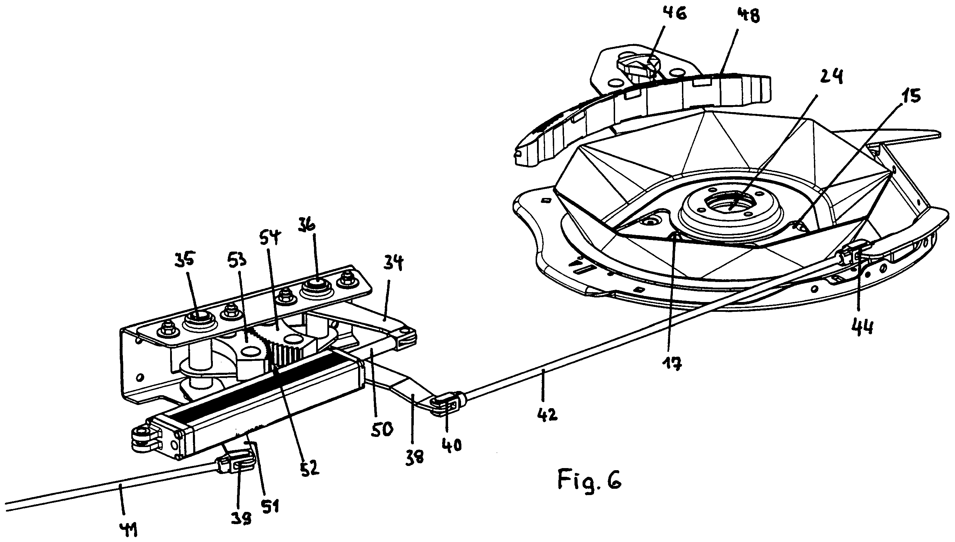

- **Fig. 6**: eine vergrößerte Detailansicht der Ausführungsform nach Fig. 5 und

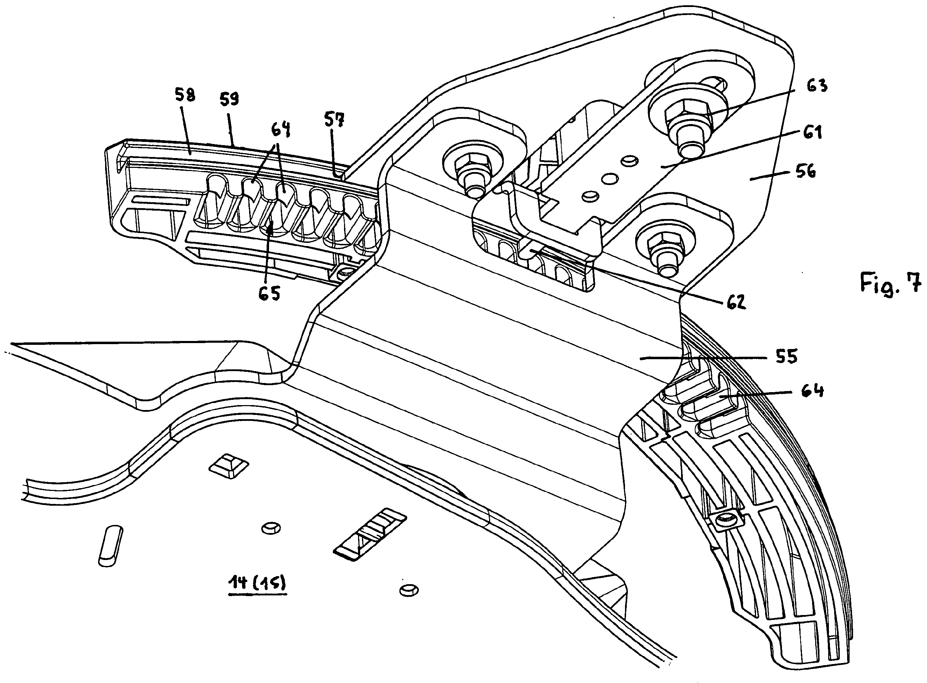

- **Fig. 7**: eine vergrößerte, perspektivische Detailansicht auf den drehbaren Boden und die Positionsanzeige von unten.

Der in Fig. 1 gezeigte Zweischeibenstreuer weist einen Rahmen 1 mit einer Quertraverse 2 auf, die im Falle eines von der Zapfwelle des Traktors abgeleiteten mechanischen Antriebs der Wurfscheiben 3 und 4 mit den Wurfschaufeln 5 und 6 einen Quertrieb aufnimmt, während im Falle eines drehzahlregelbaren hydraulischen oder elektrischen Antriebs die jeder Wurfscheibe zugeordneten Hydraulik- bzw. Elektromotoren mit der Quertraverse verbunden sind.

Der Zweischeibenstreuer weist einen Behälter 7 mit zwei trichterförmigen Behälterteilen 8 bzw. 9 auf, die am unteren Ende jeweils in ein polygonal geformtes Unterteil 10 bzw. 11 mit einem Bodenring 12 bzw. 13 übergeben (Fig. 2). Unterhalb des Bodenrings 12 bzw. 13 ist jeweils ein drehbarer Boden 14 bzw. 15 mit einer Dosieröffnung 16 bzw. 17 angeordnet, deren freier Querschnitt mittels eines nicht gezeigten Dosierschiebers zur Einstellung der Streumenge steuerbar ist.

Bei den in Figuren 1 bis 5 gezeigten Ausführungsbeispielen ist ferner ein Wurfscheibenschutz 18 vorgesehen, der die Wurfscheiben 3 und 4 mit dem Wurfflügeln 5 und 6 teilweise umgibt. Er besteht aus mehreren miteinander verbundenen Blechabschnitten, von denen ein mittlerer Abschnitt 19 zwischen den Wurfscheiben und den Behälterteilen 8 bzw. 9, insbesondere den Unterteilen 10 bzw. 11, angeordnet ist und je ein weiterer bogenförmiger Abschnitt 20, 21 die Wurfscheiben in ihrem der Fahrtrichtung 22 zugekehrten, vorderen Bereich umgeben.

Zum Verlagern der durch die Lage der Dosieröffnungen 16, 17 mit ihren Dosierschiebern bestimmten Aufgabepunktes lassen sich die drehbaren Böden 14, 15 um ihr Zentrum 23 bzw. 24 verdrehen. Hierzu dient eine Verstelleinrichtung 25, die bei dem in Fig. 2 und 3 gezeigten Ausführungsbeispiel aus je einem Elektrozylinder 26 bzw. 27 und einem an einer Mittelkonsole 28 gelagerten Hebelgestänge besteht. Die Elektrozylinder 26, 27 und die Mittelkonsole 28 sind zwischen den Wurfscheiben 3, 4 und gegenüber diesen bzw. den Drehzentren 23, 24 der drehbaren Böden in Fahrtrichtung 22 nach vorne versetzt angeordnet. Die Elektrozylinder 26, 27 sind an ihrem einen Ende an je einer ortsfesten Konsole 29 bzw. 30 abgestützt und, wie Fig. 3 erkennen lässt, horizontal übereinander angeordnet. Der größte Teil der Verstelleinrichtung, bestehend aus Elektrozylinder 26, 27 und einem von diesem betätigten Hebelgestänge liegt - von hinten gesehen - hinter dem Wurfscheibenschutz 18 mit seinem Mittelabschnitt 19 und damit geschützt vor Düngerstaub und Düngerpartikeln.

Beim Ausführungsbeispiel nach Fig. 2 und 3 greift das Betätigungselement 31, 32 jedes Elektrozylinders 26 bzw. 27 an einem Schwenkhebel 33 bzw. 34 das Hebelgestänge an, die jeweils am anderen Ende auf einen in der Mittelkonsole 28 drehbar gelagerten Zapfen 35 bzw. 36 wirken, der an seinem gegenüberliegenden Ende mit einem Schwenkhebel 37 bzw. 38 verbunden ist, dessen Schwenkbewegung über ein Gelenk 39 bzw. 40 auf je eine sich nach außen erstreckende und den Wurfscheibenschutz durchgreifende Lenkerstange 41 bzw. 42 übertragen wird, die ihrerseits gelenkig an je einem der drehbaren Böden 14 bzw. 15 angreift.

Der in Fig. 3 gezeigte obere Elektrozylinder wirkt über sein Betätigungselement 31 und das Hebelgestänge 33, 37 mit dem Drehzapfen 35 und der Lenkerstange 41 mit ihrem Gelenk 43 auf den in Fig. 2 und 3 links gezeigten Boden 14 (in Fahrtrichtung rechter Boden), während der unten liegende Elektrozylinder 27 über die analogen Hebel des Hebelgestänges auf den in der Zeichnung rechts wiedergegebenen Boden wirkt. Wie aus der Zeichnung ferner ersichtlich, liegen von der genannten Verstelleinrichtung nur ein Teil der Lenkerstangen außerhalb des Wurfscheibenschutzes 18.

Auch bei einem Zweischeibenstreuer ohne Wurfscheibenschutz ist durch die Anordnung der gesamten Verstelleinrichtung 25 zwischen den Wurfscheiben und gegenüber diesen in Fahrtrichtung nach vorne versetzt ein Schutz der Elektrozylinder und des Hebelgestänges vor Düngerstaub und verspritzenden Düngerpartikeln gewährleistet.

Der Vollständigkeit wegen sei in Verbindung mit Fig. 1 bis 3 erwähnt, dass mit jedem drehbaren Boden eine Positionsanzeige 45 bzw. 46 in Form eines Zeigers verbunden ist, der mit einer behälterfesten Skala 47 bzw. 48 zusammenwirkt. Die Skalen 47, 48 sind mit einer die Lage des Aufgabepunktes repräsentierenden Skalierung versehen. Auf Einzelheiten dieser Einrichtung wird später in Verbindung mit Fig. 7 eingegangen.

Bei dem in den Fig. 4 bis 6 gezeigten Ausführungsbeispiel weist die Verstelleinrichtung einen einzigen Elektrozylinder 49 zur Einstellung bzw. Verlagerung des Aufgabepunktes an beiden Wurfscheiben auf. Er ist - wie der größte Teil der Verstelleinrichtung - wiederum hinter dem Wurfscheibenschutz 18 angeordnet. Der Elektrozylinder 49 wirkt mit seinem Betätigungselement 50 auf den mit dem in der Mittelkonsole 28 drehbaren Zapfen 36 verbundenen Schwenkhebel 34. Auf dem drehbaren Zapfen 36 sitzt wiederum der Schwenkhebel 38, der bei 40 gelenkig an der Lenkerstange 42 angreift, die wiederum über ihr Gelenk 44 den drehbaren Boden 15 verstellt.

Bis hierhin entspricht die Verstelleinrichtung mit Elektrozylinder 49 und Hebelgestänge demjenigen Teil der Verstelleinrichtung der Fig. 2 und 3 mit dem Elektrozylinder 27 und den von dessen Betätigungselement 32 bewegten Teilen des Hebelgestänges, weshalb die gleichen Bezugszeichen für das Hebelgestänge übernommen werden. Abweichend von der ersten Ausführungsform sind die beiden Schwenkhebel 34 und 51, von denen letzterer die Lenkerstange 41 für den drehbaren Boden 14 treibt, über eine Koppel 52 miteinander verbunden, die in der gezeigten Ausführungsform von zwei miteinander kämmenden Stirnradsegmenten 53, 54 gebildet ist, wie dies insbesondere aus Fig. 6 ersichtlich ist. Die Stirnradsegmente 53, 54 sitzen jeweils auf den Drehzapfen 35, 36, so dass sie deren Drehbewegung mitmachen und für einen Synchronlauf der vom Stellweg des Elektrozylinders 49 eingeleiteten Schwenkbewegung der Schwenkhebel 34 und 51 bzw. des Stellwegs der Lenkerstangen 41 und 42 sorgen.

Fig. 7 zeigt eine abgebrochene Unteransicht eines der drehbaren Böden 14, 15, mit dem über ein nach oben gezogenes Formteil 55 aus Blech oder Kunststoff und ein mit diesem verbundenes plattenförmiges Teil 56 die bereits erwähnte Positionsanzeige 45 bzw. 46 (in Fig. 7 nicht gezeigt) verbunden ist. Der innen liegende Rand 57 des plattenförmigen Teils 56 läuft bei der Aufgabepunktverlagerung in einem Führungsschlitz 58, der sich in der außen liegenden bogenförmigen Stirnseite 59 eines die Skala 47 bzw. 48 an einer Oberseite aufweisenden, ortsfest angebrachten Ringteils 60 befindet. Die Positionsanzeige 45, 46, die mit der Skala 47 bzw. 48 zusammenwirkt, sitzt auf einem Schieber 61 mit einem Rastfinger 62, der nach Lösen der Schraube 63 in eine der Ausnehmungen 64 an der außen am Ringteil 60 angeordneten teilringförmigen Rastleiste 65 in Eingriff gebraucht werden kann.

Während beim normalen Betrieb der Aufgabepunkt elektronisch geregelt unter Mitlauf der Positionsanzeige eingestellt wird, der Schieber und der Rastfinger also in der in Fig. 7 gezeigten Position mitgenommen werden, dient die zuvor beschriebene Ausführung zur Notfallbetätigung, bei der das plattenförmige Teil 56 mit dem Formteil 55 und dem drehbaren Boden auf die gewünschte Position gedreht werden, in der der Anzeiger diese Position an der Skala anzeigt, die dann nach Lösen der Schraube 63 und Verschieben des Schiebers bis zum Eingriff des Rastfingers 62 in die korrespondierende Rastausnehmung 64 fixierbar ist.

**Bezugszeichenliste**

| | | | |
|---|---|---|---|
| 1 | Rahmen | 23 | Drehzentrum |
| 2 | Quertraverse | 24 | Drehzentrum |
| 3 | Wurfscheibe | 25 | Verstelleinrichtung |
| 4 | Wurfscheibe | 26 | Elektrozylinder |
| 5 | Wurfschaufeln | 27 | Elektrozylinder |
| 6 | Wurfschaufeln | 28 | Mittelkonsole |
| 7 | Behälter | 29 | Konsole |
| 8 | trichterförmiges Behälterteil | 30 | Konsole |
| 9 | trichterförmiges Behälterteil | 31 | Betätigungselement |
| 10 | Unterteil | 32 | Betätigungselement |
| 11 | Unterteil | 33 | Schwenkhebel |
| 12 | Bodenring | 34 | Schwenkhebel |
| 13 | Bodenring | 35 | Zapfen |
| 14 | drehbarer Boden | 36 | Zapfen |
| 15 | drehbarer Boden | 37 | Schwenkhebel |
| 16 | Dosieröffnung | 38 | Schwenkhebel |
| 17 | Dosieröffnung | 39 | Gelenk |
| 18 | Wurfscheibenschutz | 40 | Gelenk |
| 19 | mittlerer Abschnitt | 41 | Lenkerstange |
| 20 | bogenförmiger Abschnitt | 42 | Lenkerstange |
| 21 | bogenförmiger Abschnitt | 43 | Gelenk |
| 22 | Fahrtrichtung | 44 | Gelenk |
| 45 | Positionsanzeige | | |
| 46 | Positionsanzeige | | |
| 47 | Skala | | |
| 48 | Skala | | |
| 49 | Elektrozylinder | | |
| 50 | Betätigungselement | | |
| 51 | Schwenkhebel | | |
| 52 | Koppel | | |
| 53 | Stirnradsegment | | |
| 54 | Stirnradsegment | | |
| 55 | Formteil | | |
| 56 | plattenförmiges Teil | | |
| 57 | Rand | | |
| 58 | Führungsschlitz | | |
| 59 | Stirnseite | | |
| 60 | Ringteil | | |
| 61 | Schieber | | |
| 62 | Rastfinger | | |
| 63 | Schraube | | |
| 64 | Rastausnehmung | | |
| 65 | Rastleiste | | |

## Patentansprüche

1. Zweischeibenstreuer mit einem Streugut-Behälter (7), der zwei trichterförmige Unterteile (8, 9) mit je einem drehbaren Boden (14, 15) mit daran angeordneten Dosiereinrichtungen aufweist, die jeweils aus einer Dosieröffnung (16, 17) und einem steuerbaren Dosierschieber zur Abgabe des Streugutes in einstellbaren Streumengen bestehen, und mit zwei rotierend angetriebenen Wurfscheiben (3, 4), wobei zur Verlagerung des Aufgabepunktes des dosierten Streugutes auf die Wurfscheibe (3, 4) ein ortsfest angelenkter Elektrozylinder (26, 27) vorgesehen ist, der mit seinem Stellweg den Boden (14, 15) zusammen mit der Dosiereinrichtung verdreht, **dadurch gekennzeichnet, dass** der Elektrozylinder (26, 27) im Wesentlichen quer zur Fahrtrichtung (22) des Streuers im Bereich zwischen den Wurfscheiben (3, 4) und gegenüber deren Achsen in Fahrtrichtung (22) nach vorne versetzt angeordnet ist und über je ein Hebelgestänge (33-38) mit sich nach außen erstreckender Lenkerstange (41, 42) an dem drehbaren Boden (14, 15) angreift.

2. Zweischeibenstreuer nach Anspruch 1, **dadurch gekennzeichnet, dass** für jeden drehbaren Boden (14, 15) ein eigener Elektrozylinder (26, 27) vorgesehen ist und beide Elektrozylinder im Wesentlichen quer zur Fahrtrichtung (22) des Streuers im Bereich zwischen den Wurfscheiben (3, 4) und gegenüber deren Achsen in Fahrtrichtung (22) nach vorne versetzt angeordnet sind und über je ein Hebelgestänge (33-38) mit sich jeweils nach außen erstreckenden Lenkerstangen (41, 42) an dem entsprechenden, drehbaren Boden (14, 15) angreifen.

3. Zweischeibenstreuer nach Anspruch 1, **dadurch gekennzeichnet, dass** für beide drehbaren Böden (14, 15) ein einziger Elektrozylinder (49) im Wesentlichen quer zur Fahrtrichtung (22) des Streuers im Bereich zwischen den Wurfscheiben (3, 4) und gegenüber deren Achsen in Fahrtrichtung (22) nach vorne versetzt angeordnet ist und über je ein Hebelgestänge mit einer diese kinematisch verbindenden, zentral angeordneten Koppel (52) auf je eine an dem entsprechenden drehbaren Boden (14, 15) angreifende Lenkerstange (41, 42) wirkt.

4. Zweischeibenstreuer nach einem der Ansprüche 1 bis 3, **dadurch gekennzeichnet, dass** der Elektrozylinder (26, 27 bzw. 49) über einen an ihm und an einer ortsfesten Konsole (28) gelagerten Schwenkhebel auf einen in der Konsole gelagerten Zapfen (35, 36) wirkt, dessen Drehbewegung über einen Schwenkhebel (37, 38) auf die Lenkerstange (41, 42) übertragbar ist.

5. Zweischeibenstreuer nach Anspruch 3 oder 4, **dadurch gekennzeichnet, dass** der einzige Elektrozylinder (49) über einen an ihm angelenkten Schwenkhebel (34) auf einen an einer ortsfesten Konsole (28) drehbar gelagerten Zapfen (36) wirkt, der ein einen Teil der Koppel (52) bildendes Stirnradsegment (54) aufweist, das mit einem an einem in der Konsole drehbar gelagerten weiteren Zapfen (35) angeordneten weiteren Stirnradsegment (53) kämmt, wobei die über die Stirnradsegmente kinematisch verbundenen Zapfen über je einen Schwenkhebel (38, 51) auf eine Lenkerstange (42, 41) wirken.

6. Zweischeibenstreuer nach Anspruch 3 oder 4, **dadurch gekennzeichnet, dass** als Koppel (52) ein außermittig gelagerter, zweiarmiger Hebel mit entsprechend dem Versatz der Verstelleinrichtung gegenüber den Achsen der Wurfscheiben (3, 4) unterschiedlichen Hebellängen vorgesehen ist, und dass an dem einen Hebelarm der Elektrozylinder (49) und eine der Lenkerstangen (41, 42) und am anderen Hebelarm die andere Lenkerstange (42, 41) jeweils gelenkig angreifen.

7. Zweischeibenstreuer nach einem der Ansprüche 1 bis 6, **dadurch gekennzeichnet, dass** ein sich zwischen den Wurfscheiben (3, 4) und mit Ausnahme deren Abwurfbereichs oberhalb derselben erstreckender Wurfscheibenschutz (18) vorgesehen ist, der oben im Wesentlichen nur je einen Ausschnitt für die Aufgabe des Streugutes auf die beiden Wurfscheiben (3, 4) aufweist, wobei die Konsole (28, 29, 30) für den bzw. die Elektrozylinder (26, 27, 49) und diese selbst sowie die wesentlichen Teile des Hebelgestänges (33-38) von den Wurfscheiben (3, 4) aus gesehen hinter dem Wurfscheibenschutz (18) angeordnet sind.

8. Zweischeibenstreuer nach einem der Ansprüche 1 bis 7, **dadurch gekennzeichnet, dass** lediglich die Lenkerstangen (41, 42) den Wurfscheibenschutz (18) nach außen durchgreifen.

9. Zweischeibenstreuer nach einem der Ansprüche 1 bis 7, **dadurch gekennzeichnet, dass** die Lenkerstangen (41, 42) wenig über dem Wurfscheibenschutz (18) liegen.

10. Zweischeibenstreuer nach einem der Ansprüche 1 bis 9, **dadurch gekennzeichnet, dass** der bzw. die Elektrozylinder (26, 27, 49) etwa waagerecht angeordnet ist bzw. sind.

11. Zweischeibenstreuer nach einem der Ansprüche 1 bis 10, **dadurch gekennzeichnet, dass** mit jedem drehbaren Boden (14, 15) eine mitlaufende Positionsanzeige (45, 46) verbunden ist, die mit einer ortsfesten Skala (47, 48) zur Anzeige eines die Lage des Aufgabepunktes repräsentierenden Wertes zusammenwirkt.

12. Zweischeibenstreuer nach einem der Ansprüche 1 bis 11, **dadurch gekennzeichnet, dass** die Positionsanzeige (45, 46) lösbar mit dem drehbaren Boden (14, 15) verbunden ist und zur manuellen Notbetätigung über einen Rastfinger (63) mit einer der Skala angepassten Folge von Rastaussparungen (64) in Eingriff bringbar ist.

13. Zweischeibenstreuer nach Anspruch 11 oder 12, **dadurch gekennzeichnet, dass** die Skala (47, 48) und die mit ihr zusammenwirkende Positionsanzeige (45, 46) auf der der Fahrtrichtung (22) abgekehrten Rückseite des Bodens (14, 15) etwa mittig derselben angeordnet sind.

14. Zweischeibenstreuer nach einem der Ansprüche 1 bis 13, **dadurch gekennzeichnet, dass** jeder Elektrozylinder (26, 27, 49) eine Lagerückmeldung aufweist und von einer elektronischen Bedien- und Regeleinheit auf eine gewünschte, für die Lage des Aufgabepunktes repräsentative Position steuerbar ist.

## Claims

1. Two-disc spreader with a spreading material container (7) which has two funnel-shaped lower parts (8, 9) each having a rotatable base (14, 15) with metering devices arranged thereon, the metering devices each consisting of a metering opening (16, 17) and a controllable metering slide for dispensing the spreading material at adjustable spreading rates, and with two rotatingly driven distributor discs (3, 4), wherein, in order to shift the feeding point of the metered spreading material onto the distributor disc (3, 4), an electric cylinder (26, 27) is provided which is linked in a fixed position and, with its displacement, rotates the base (14, 15) together with the metering device, **characterized in that** the electric cylinder (26, 27) is arranged substantially transversely with respect to the direction of travel (22) of the spreader in the region between the distributor discs (3, 4) and offset forwards in the direction of travel (22) in relation to the axes thereof and acts on the rotatable base (14, 15) via a respective lever linkage (33-38) with an outwardly extending link rod (41, 42).

2. Two-disc spreader according to Claim 1, **characterized in that** a dedicated electric cylinder (26, 27) is provided for each rotatable base (14, 15), and both of the electric cylinders are arranged substantially transversely with respect to the direction of travel (22) of the spreader in the region between the distributor discs (3, 4) and offset forwards in the direction of travel (22) in relation to the axes thereof and act on the corresponding rotatable base (14, 15) via a respective lever linkage (33-38) with outwardly extending link rods (41, 42), respectively.

3. Two-disc spreader according to Claim 1, **characterized in that**, for both of the rotatable bases (14, 15), a single electric cylinder (49) is arranged substantially transversely with respect to the direction of travel (22) of the spreader in the region between the distributor discs (3, 4) and offset forwards in the direction of travel (22) in relation to the axes thereof and acts via a respective lever linkage with a centrally arranged coupler (52), which connects said lever linkages kinematically, on a respective link rod (41, 42) acting on the corresponding rotatable base (14, 15).

4. Two-disc spreader according to one of Claims 1 to 3, **characterized in that** the electric cylinder (26, 27 or 49) acts via a pivot lever, which is mounted thereon as well as on a stationary bracket (28), on a pin (35, 36) which is mounted in the bracket and the rotational movement of which can be transmitted to the link rod (41, 42) via a pivot lever (37, 38).

5. Two-disc spreader according to Claim 3 or 4, **characterized in that** the single electric cylinder (49) acts via a pivot lever (34), which is coupled thereto, on a pin (36) which is mounted rotatably on a positionally fixed bracket (28) and has a spur gear segment (54) which forms a part of the coupler (52) and meshes with a further spur gear segment (53) arranged on a further pin (35) which is mounted rotatably in the bracket, wherein the pins, which are connected kinematically via the spur gear segments, act on a link rod (42, 41) via a respective pivot lever (38, 51).

6. Two-disc spreader according to Claim 3 or 4, **characterized in that** an externally mounted, two-armed lever with different lever lengths corresponding to the offset of the shifting device in relation to the axes of the distributor discs (3, 4) is provided as the coupler (52), and **in that** the electric cylinder (49) and one of the link rods (41, 42) act on the one lever arm and the other link rod (42, 41) acts on the other lever arm, in each case in an articulated manner.

7. Two-disc spreader according to one of Claims 1 to 6, **characterized in that** a distributor disc guard (18) is provided between the distributor discs (3, 4) and above the same, with the exception of their throw-out region, said distributor disc guard essentially having just one cutout at the top for the feeding of the spreading material to the two distributor discs (3, 4), wherein the bracket (28, 29, 30) for the electric cylinder or the electric cylinders (26, 27, 49) and the latter themselves and also the essential parts of the lever linkage (33-38) are arranged behind the distributor disc guard (18), as seen from the distributor discs (3, 4).

8. Two-disc spreader according to one of Claims 1 to 7, **characterized in that** only the link rods (41, 42) reach outwards through the distributor disc guard (18).

9. Two-disc spreader according to one of Claims 1 to 7, **characterized in that** the link rods (41, 42) lie just above the distributor disc guard (18).

10. Two-disc spreader according to one of Claims 1 to 9, **characterized in that** the electric cylinder or the electric cylinders (26, 27, 49) is or are arranged approximately horizontally.

11. Two-disc spreader according to one of Claims 1 to 10, **characterized in that** each rotatable base (14, 15) has a co-running position display (45, 46) connected thereto, said position display interacting with a positionally fixed scale (47, 48) for displaying a value representing the position of the feeding point.

12. Two-disc spreader according to one of Claims 1 to 11, **characterized in that** the position display (45, 46) is releasably connected to the rotatable base (14, 15) and, for manual emergency actuation, can be brought via a latching finger (63) into engagement with a sequence of latching recesses (64), said sequence being matched to the scale.

13. Two-disc spreader according to Claim 11 or 12, **characterized in that** the scale (47, 48) and the position display (45, 46) interacting therewith are arranged approximately in the centre of the rear side of the base (14, 15), said rear side facing away from the direction of travel (22).

14. Two-disc spreader according to one of Claims 1 to 13, **characterized in that** each electric cylinder (26, 27, 49) has position feedback and is controllable by an electronic operating and control unit to a desired position representative of the position of the feeding point.

## Revendications

1. Épandeur à deux disques avec un réservoir de produit à épandre (7) comportant deux parties inférieures (8, 9) en forme de trémie respectivement avec un fond (14, 15) pouvant tourner avec des dispositifs de dosage y étant raccordés et respectivement composés d' une ouverture de dosage (16, 17) et d' une vanne de dosage pouvant être commandé pour la distribution du produit à épandre dans des quantités d' épandage réglables et avec deux disques d' éjection (3, 4) entraînés en rotation, un vérin électrique (26, 27) articulé fixement sur place étant prévu pour déplacer le point de libération du produit à épandre dosé sur le disque d' éjection (3, 4) et faisant tourner, avec sa course de réglage, le fond (14, 15) conjointement avec le dispositif de dosage, **caractérisé en ce que** le vérin électrique (26, 27) est disposé de façon décalée pour l' essentiel transversalement à la direction d' avancée (22) de l' épandeur dans la région située entre les disques d' éjection (3, 4) par rapport à leurs axes, dans la direction d' avancée (22) vers l' avant, ledit vérin électrique accroche le fond (14, 15) pouvant tourner respectivement via une tringlerie (33-38) comprenant une barre de bielle (41, 42) s'étendant vers l'extérieur.

2. Épandeur à deux disques selon la revendication 1, **caractérisé en ce que** pour chaque fond (14, 15) pouvant tourner, on prévoit un vérin électrique (26, 27) propre et que les deux vérins électriques sont disposés de façon décalée vers l' avant pour l' essentiel transversalement à la direction d' avancée (22) de l' épandeur dans la région située entre les disques d' éjection (3, 4) et par rapport à leurs axes dans la direction d' avancée (22), lesdits vérins électriques accrochent respectivement le fond (14, 15) pouvant tourner correspondant via une tringlerie (33-38) comprenant des barres de bielle (41, 42) s'étendant respectivement vers l'extérieur.

3. Épandeur à deux disques selon la revendication 1, **caractérisé en ce que** pour les deux fonds (14, 15) pouvant tourner, un unique vérin électrique (49) est disposé de façon décalée vers l' avant pour l' essentiel transversalement à la direction d' avancée (22) de l' épandeur dans la région située entre les disques d' éjection (3, 4) et par rapport à leurs axes dans la direction d' avancée (22) et agit, respectivement via une tringlerie avec un accouplement (52) les reliant cinématiquement et disposé centralement respectivement sur une barre de bielle (41, 42) accrochant le fond (14, 15) pouvant tourner correspondant.

4. Épandeur à deux disques selon l' une quelconque des revendications 1 à 3, **caractérisé en ce que** le vérin électrique (26, 27 et/ou 49) agit, via un levier à bascule articulé à celui-ci et à une console (28) fixe sur place, sur un tenon (35, 36) disposé dans la console dont le mouvement de rotation peut être transmis à la barre de bielle (41, 42) via un levier à bascule (37, 38).

5. Épandeur à deux disques selon la revendication 3 ou 4, **caractérisé en ce que** l' unique vérin électrique (49) agit, via un levier à bascule (34) articulé à lui, sur un tenon (36) articulé à une console (28) fixe sur place, ledit tenon comportant un segment de volant (54) faisant partie de l'accouplement (52), ledit segment s' engrenant avec un segment de volant (53) supplémentaire disposé au niveau d' un tenon (35) supplémentaire disposé de façon à pouvoir tourner dans la console, les tenons reliés cinématiquement via les segments de volant agissant respectivement sur une barre de bielle (42, 41) via un levier à bascule (38, 51).

6. Épandeur à deux disques selon la revendication 3 ou 4, **caractérisé en ce que** l' accouplement (52) utilisé est un levier à deux bras articulé de façon décentrée avec différentes longueurs de levier correspondant au décalage du dispositif de déplacement par rapport aux axes des disques d' éjection (3, 4). et **en ce que** le vérin électrique (49) et une des barres de bielle (41, 42) accrochent respectivement de façon articulée l'un bras de levier et que l'autre barre de bielle (42, 41) accroche respectivement de façon articulée l'autre bras de levier.

7. Épandeur à deux disques selon l' une quelconque des revendications 1 à 6, **caractérisé en ce qu'** une protection de disque d' éjection (18) s' étendant entre les disques d' éjection (3, 4) et, à l' exception de sa région d' éjection, au-dessus de ceux-ci, est prévue, cette protection comportant en haut, pour l' essentiel uniquement une échancrure respectivement prévue pour la libération du produit à épandre sur les deux disques d' éjection (3, 4), la console (28, 29, 30) étant disposée derrière la protection de disque d' éjection (18) pour le et/ou les vérins électriques (26, 27, 49) et ceux-ci eux-mêmes ainsi que les parties essentielles des tringleries (33-38), en partant des disques d' éjection (3, 4).

8. Épandeur à deux disques selon l' une quelconque des revendications 1 à 7, **caractérisé en ce que** seules les barres de bielle (41, 42) traversent vers l' extérieur la protection de disque d' éjection (18).

9. Épandeur à deux disques selon l' une quelconque des revendications 1 à 7, **caractérisé en ce que** les barres de bielle (41, 42) reposent peu sur la protection de disque d' éjection (18).

10. Épandeur à deux disques selon l' une quelconque des revendications 1 à 9, **caractérisé en ce que** le et/ou les vérins électriques (26, 27, 49) est et/ou sont disposé(s) approximativement horizontalement.

11. Épandeur à deux disques selon l' une quelconque des revendications 1 à 10, **caractérisé en ce qu'** un affichage de position (45, 46) suiviste est relié à chaque fond (14, 15) pouvant tourner, ledit affichage interagissant avec une échelle (47, 48) fixe sur place pour afficher la valeur représentant la position du point de libération.

12. Épandeur à deux disques selon l' une quelconque des revendications 1 à 11, **caractérisé en ce que** l' affichage de position (45, 46) est relié de façon amovible au fond (14, 15) pouvant tourner et est amené en prise avec une succession, adaptée à l' échelle, d' évidements d' arrêt (64) pour l' actionnement d' urgence manuel, via un doigt d' arrêt.

13. Épandeur à deux disques selon la revendication 11 ou 12, **caractérisé en ce que** l' échelle (47, 48) et le côté arrière du fond (14, 15), opposé à la direction d' avancée (22), avec son affichage de position (45, 46) interactif, sont disposés approximativement au centre de celui-ci.

14. Épandeur à deux disques selon l' une quelconque des revendications 1 à 13, **caractérisé en ce que** chaque vérin électrique (26, 27, 49) présente une rétroaction de palier de roulement et peut être commandé par une unité de commande et de réglage électronique pour atteindre une position souhaitée représentative de la position du point de libération.
